Europäisches Patentamt

European Patent Office

Office européen des brevets

(11) Veröffentlichungsnummer: **0 199 904**

**A1**

(12) **EUROPÄISCHE PATENTANMELDUNG**

(21) Anmeldenummer: 86101496.7

(22) Anmeldetag: 05.02.86

(51) Int. Cl.⁴: **G 01 F 23/28**
**//B65B55/10**

(30) Priorität: 03.05.85 DE 3515890

(43) Veröffentlichungstag der Anmeldung:
05.11.86 Patentblatt 86/45

(84) Benannte Vertragsstaaten:
CH FR GB IT LI SE

(71) Anmelder: PKL Verpackungssysteme GmbH
Kennedydamm 15-17
D-4000 Düsseldorf 30(DE)

(72) Erfinder: Buschmann, Gerhard
Buchholzer Weg 2
D-4000 Düsseldorf(DE)

(74) Vertreter: Pfeiffer, Helmut
Jagenberg AG Patentwesen Kennedydamm 15-17
Postfach 1123
D-4000 Düsseldorf 30(DE)

(54) Niveaustandsmesseinrichtung für Flüssigkeiten, insbesondere H2O2.

(57) Die Erfindung bezieht sich auf eine Niveaustandmeßeinrichtung für Flüssigkeiten in einem lichtdurchlässigen Füllröhrchen (5) mit mindestens einem außen angeordneten Fühler, der aus einem Lichtsender (16) und einem Lichtempfänger (17) besteht. Vorzugsweise sind mehrere solcher Fühler übereinander angeordnet. Der Lichtsender (16) und Lichtempfänger (17) eines jeden Fühlers sind zueinander und in Bezug auf die Innenwand (18) des Röhrchens (5) derart angeordnet, daß die Strahlung des Lichtsenders (16) unter einem vom rechten Winkel verschiedenen Winkel auf die Innenwand (18) des Füllröhrchens gerichtet ist und bei leerem Füllröhrchen (5) vom Lichtempfänger (17) die an der Innenwand reflektierte Strahlung empfangen wird. Mit einer solchen Niveaustandsmeßeinrichtung, die aus handelsüblichen Bauelementen, wie Infrarotdioden und Fototransistoren aufgebaut werden kann, ist es möglich, bei sehr geringem vorrichtungstechnischem Aufwand den Niveaustand exakt zu erfassen.

FIG.2

EP 0 199 904 A1

*1*
- 2 -

Anm.: Fa. PKL  Verpackungssysteme GmbH
Kennedydamm 15-17, 4000 Düsseldorf 30

Niveaustandsmeßeinrichtung für Flüssigkeiten,
insbesondere $H_2O_2$

Beim Sterilisieren der Innenwände von mit Getränken
zu füllenden Verpackungen wird häufig $H_2O_2$ in sehr
kleiner Menge eingesprüht. Dabei ist wesentlich, daß
die Menge möglichst genau eingehalten wird, damit bis
zum Füllen des Behälters mit dem Getränk das eingesprühte $H_2O_2$ ganz verdunstet ist. Andernfalls kommt es zu
Geschmacksverfälschungen des Getränkes.

Bei einer bekannten Einrichtung zur impulsweisen Abgabe
solcher kleiner, mit einem Meßgerät zu kontrollierender
Flüssigkeitsmengen ist ein im Querschnitt verhältnismäßig kleines, lichtdurchlässiges Füllröhrchen vorgesehen, dessen Auslaß über ein Ausstoßorgan für die kleinen
Flüssigkeitsmengen mit einer Sprühdüse verbunden ist.
Außen am Füllröhrchen sind ein oberer und ein unterer
Niveaustandfühler angeordnet, der über eine Steuereinrichtung die Entleerung des Füllröhrchens und danach
dessen Befüllung steuert. Die Menge der Flüssigkeit
zwischen den beiden von dem oberen und unteren Fühler
kontrollierten Niveaus entspricht der Menge, die für
mehrere Sprühvorgänge benötigt wird. Durch Zählen  der

K/In.- 45 045
19.2.05

Sprühvorgänge zwischen dem oberen und unteren Niveau läßt sich errechnen, welche durchschnittliche Sprühmenge für einen Sprühvorgang benötig wird (DE-PS 2 708 422).

Um die Flüssigkeitsmenge eines jeden Sprühvorganges zu erfassen, ist es auch bekannt, an Stelle der außen am Röhrchen angeordneten Niveaufühler im Füllröhrchen einen Kondensator anzuordnen, dessen Dielektrikum von der Flüssigkeit des Füllröhrchen gebildet wird. Die mit der Füllhöhe sich ändernde Kapazität des Kondensators ist dann ein Maß für die abgegebene Flüssigkeitsmenge. Der meßtechnische Aufwand für eine solche Einrichtung ist aber beachtlich (DE-OS 3 140 485).

Der Erfindung liegt die Aufgabe zugrunde, eine Niveaustandsmeßeinrichtung zu schaffen, mit der es möglich ist, auf einfachere Art und Weise als bisher den Niveaustand eines mit Flüssigkeit füllbaren Füllröhrchens exakt zu erfassen.

Diese Aufgabe wird erfindungsgemäß dadurch gelöst, daß jeder Fühler aus einem Lichtsender und einem Lichtempfänger besteht, wobei die Strahlung des Lichtsenders unter einem vom rechten Winkel abweichenden Winkel auf die Innenwand des Füllröhrchens gerichtet ist und der Lichtempfänger auf die bei leerem Füllröhrchen an der Innenwand reflektierte Strahlung des Lichtsenders ausgerichtet ist.

Die Erfindung nutzt die unterschiedliche Lichtbrechung des Lichtsenders an der Innenwand des gefüllten und leeren Röhrchens aus. Der apparative Aufwand dieser Meßeinrichtung ist denkbar gering, denn Lichtsender und Lichtempfänger lassen sich aus handelsüblichen Leuchtdioden und Fototransistoren aufbauen. Da im Röhrchen selbst keine Meßelemente angeordnet zu werden brauchen, kann der Querschnitt verhältnismäßig klein sein, so daß einer kleinen Menge ein großer Niveauunterschied entspricht. Damit ist auch die Voraussetzung für sehr genaue Messungen geschaffen.

Nach einer Ausgestaltung der Erfindung sind mehrere Paare von Lichtsendern und Lichtempfängern übereinander angeordnet. Bei dieser Ausgestaltung ist es möglich, über einen größeren Bereich das Niveau zu bestimmen.

Um den Einfluß störender Lichtquellen aus der Umgebung der Meßeinrichtung auszuschalten, sollte jeder Lichtsender ein Infrarotsender sein.

Vorzugsweise wird die Niveaumeßstandseinrichtung in einer Einrichtung zur Abgabe sehr kleiner, mit einem Meßgerät zu kontrollierender Flüssigkeitsmengen, insbesondere $H_2O_2$, verwendet, bei der das Füllröhrchen über ein Ventil aus einem Vorratsbehälter mit Flüssigkeit füllbar ist und über ein am unteren Auslaß angeschlossenes Ausstoßorgan entleerbar ist, und bei der eine Steuereinrichtung in Abhängigkeit von den Signalen der Niveaustandsmeßeinrichtung das Ventil und das Ausstoßorgan steuert.

Im folgenden wird die Erfindung anhand einer ein Ausführungsbeispiel darstellenden Zeichnung näher erläutert. Im einzelnen zeigen

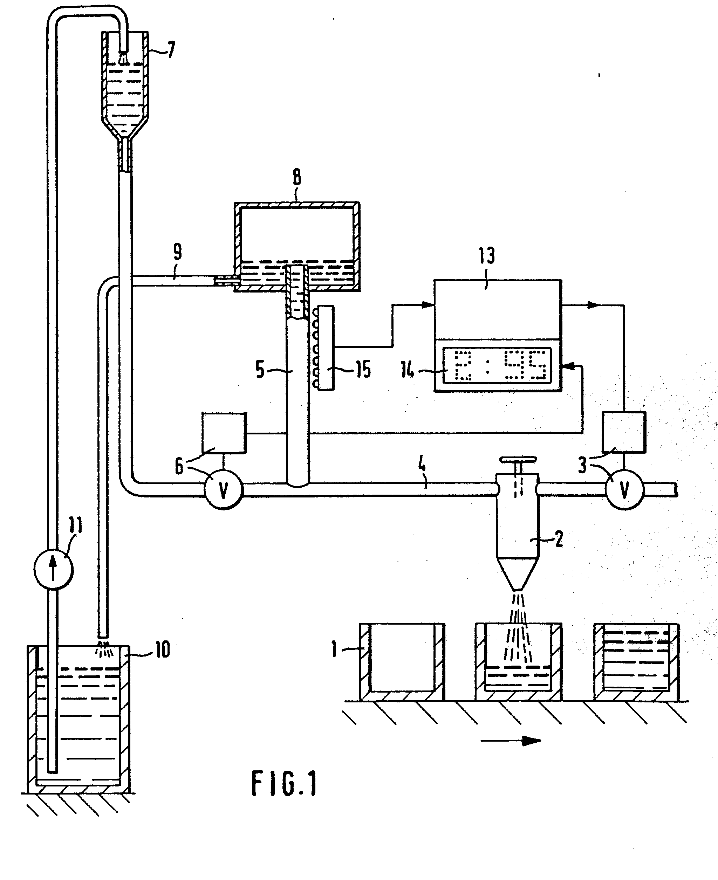

Fig. 1          eine Einrichtung zur Abgabe sehr kleiner
                Flüssigkeitsmengen,

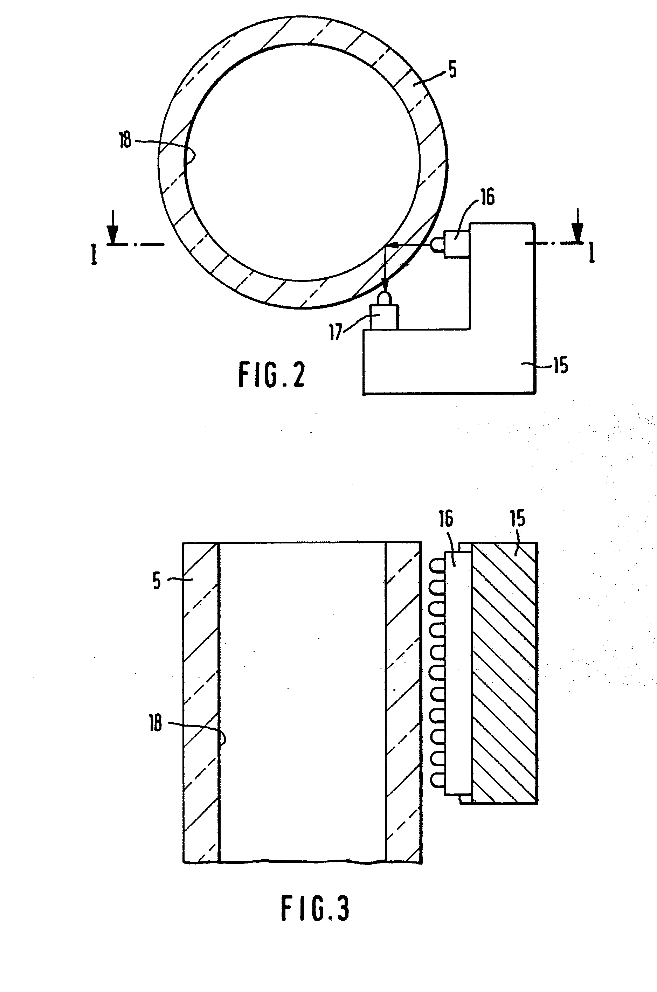

Fig. 2          das Füllröhrchen in vergrößertem Maßstab im Querschnitt und

Fig. 3          das Füllröhrchen gemäß Fig.2 im Längsschnitt nach der Linie I – I der Fig. 2.

Die mit $H_2O_2$ als Flüssigkeit innenseitig zu sterilisierenden Behälter 1 werden auf einem Transportband unterhalb einer Sprühdüse 2 schrittweise bewegt. Die Sprühdüse 2 arbeitet nach dem Injektorprinzip. Über ein Ventil 3 wird ihr impulsweise Luft zugeführt. Dabei entnimmt sie über eine Leitung 4 einem Füllröhrchen 5 eine
bestimmte Menge $H_2O_2$.

Das Füllröhrchen 5 ist über ein Ventil 6 aus einem hochgelegenen Behälter 7 mit $H_2O_2$ füllbar. Das obere Ende
des Füllröhrchens 5 ist als Überlauf ausgebildet. Bei jedem
Füllvorgang wird so viel $H_2O_2$ in das Füllröhrchen eingelassen, daß eine kleine Überschußmenge über den Überlauf
in einen Auffangbehälter 8 und von hier über eine Rücklaufleitung 9 in einen Sammelbehälter 10 zurückfließt.
Der hochgelegene Behälter 7 wird über eine Pumpe 11 von
Zeit zu Zeit mit $H_2O_2$ gefüllt.

Eine Steuereinrichtung 13 mit digitaler Anzeige 14 steuert
die Ventile 3, 6 derart, daß während des Sprühvorganges
das Ventil 6 geschlossen ist und während der Pausen zwischen den Füllvorgängen das Ventil 3 geschlossen und das
Ventil 6 zur Neubefüllung des Füllröhrchens 5 geöffnet
ist. Die Steuereinrichtung 13 erhält von einer Niveaustandsmeßeinrichtung 15 eine Information über den Niveaustand. Diese Information wird zur Anzeige gebracht, und löst die Steuervorgänge an den Ventilen 3 und 6 aus. Wie an der Anzeige abzulesen ist, ist die für eine 1 l-Milchpackung ausreichende Menge von $H_2O_2$ von 0,3 ccm mit sehr großer Genauigkeit erreicht.

Die Niveaustandsmeßeinrichtung besteht aus einer Vielzahl von einzelnen, übereinander angeordneten Fühlern, die jeweils aus einer Infrarotdiode als Lichtsender 16 und einem Fototransistor 17 als Lichtempfänger besteht. Lichtsender 16 und Lichtempfänger 17 sind zueinander und in Bezug auf die Innenwand 18 des Röhrchens 5 derart angeordnet, daß bei nicht mit Flüssigkeit gefülltem Füllröhrchen die ausgesendete Lichtstrahlung an der Innenwand 18 unter einem von dem rechten Winkel abweichenden Winkel reflektiert und somit von dem Lichtempfänger 17 empfangen werden kann. Bei einer Vielzahl von dicht übereinander angeordneten Paaren von Lichtsendern und Lichtempfängern und entsprechend kleinem freien Querschnitt des Füllröhrchens läßt sich mit hinreichender Genauigkeit der jeweilige Niveaustand angeben.

Das Füllröhrchen 5 kann sowohl für die Menge mehrerer Sprühvorgänge als auch für die Menge eines einzelnen Sprühvorganges ausgelegt sein. Im ersten Fall ist die Steuereinrichtung 13 so ausgebildet, daß sie nach dem Differenz-Meßprinzip arbeitet. In diesem Fall wird während eines Füllvorganges des Füllröhrchens nur das Ventil 3 gesteuert. Die Ansteuerung des Ventils 6 erfolgt nur am Ende der Entleerung des Füllröhrchens 5. Bei Einzelfüllung dagegen erfolgt nach jedem Sprühvorgang die Füllung des Füllröhrchens. Wegen der Möglichkeit der Differenz-Messung ist man bei der erfindungsgemäßen Lösung nicht auf den Überlauf des Füllröhrchens 5 angewiesen. Da das Niveau über die gesamte Höhe des Füllröhrchens exakt bestimmbar ist, sofern sich auch über diese Höhe die Reihe von Lichtsendern und Lichtempfängern erstrecken, läßt sich Anfangs- und Endpunkt des Sprühvorganges exakt erfassen. Auch ist es möglich, bei entsprechender Programmierung der Steuereinrichtung das Ende des Sprühvorganges durch Ansteuerung des Ventils 3 zu bestimmen.

2. Mai 1985

Ansprüche:

1.   Niveaustandsmeßeinrichtung für Flüssigkeiten in einem lichtdurchlässigen Füllröhrchen, mit mindestens einem außen angeordneten Fühler, d a d u r c h   g e k e n n z e i c h n e t , daß jeder Fühler aus   einen Lichtsender (16) und einem Lichtempfänger besteht, wobei die Strahlung des Lichtsenders (16) unter einem vom rechten Winkel verschiedenen Winkel auf die Innenwand (18) des Füllröhrchens (19) gerichtet ist und der Lichtempfänger (17) auf die bei leerem Füllröhrchen an der Innenwand (18) reflektierte Strahlung des Lichtsenders (16) ausgerichtet ist.

2.   Niveaustandsmeßeinrichtung nach Anspruch 1, d a d u r c h   g e k e n n z e i c h n e t , daß mehrere Paare von Lichtsender (16) und Lichtempfänger (17) übereinander angeordnet sind.

3.   Niveaustandsmeßeinrichtung nach Anspruch 1 oder 2, d a d u r c h   g e k e n n z e i c h n e t , daß jeder Lichtsender (16) ein Infrarotsender ist.

4.   Verwendung einer Niveaustandsmeßeinrichtung nach einem der Ansprüche 1 bis 3, in einer Einrichtung zur Abgabe sehr kleiner, mit einem  Meßgerät zu kontrollierender Flüssigkeitsmengen, insbesondere $H_2O_2$, bei

K/Tn.- 45 046
19.2.85

bei der das Füllröhrchen (5) über ein Ventil aus einem Vorratsbehälter (7) mit der Flüssigkeit füllbar und über einen am unteren Auslaß angeschlossenen Ausstoßorgan (7) entleerbar ist und aus einer Steuereinrichtung (13), die in Abhängigkeit von den Signalen der Niveaustandsmeßeinrichtung (15) das Ventil (6) und das Ausstoßorgan (2,3) steuert.

FIG.1

**FIG.2**

**FIG.3**

0199904

Nummer der Anmeldung

**Europäisches Patentamt**

## EUROPÄISCHER RECHERCHENBERICHT

| | EINSCHLÄGIGE DOKUMENTE | | | EP 86101496.7 |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl 4) |
| X | DE - B2 - 2 328 117 (SOCIETE FRAN-CAISE) <br> * Fig. 2A,2B,3,4; Anspruch 1 * | | 1-3 | G 01 F 23/28 <br> //B 65 B 55/10 |
| Y | | | 4 | |
| | -- | | | |
| X | DE - A1 - 2 940 799 (HANSMANN) <br> * Fig. 1,2,4 * | | 1 | |
| | -- | | | |
| Y,D | DE - C2 - 2 708 422 (JAGENBERG) <br> * Fig. 1; Ansprüche 1-3,6 * | | 4 | |
| | -- | | | |
| A | US - A - 3 242 794 (CRANE) <br> * Fig. 1-3; Spalte 3, Zeile 67 - Spalte 4, Zeile 2 * | | 1,2 | |
| Y | | | 4 | RECHERCHIERTE SACHGEBIETE (Int. Cl.4) |
| | -- | | | |
| A | US - A - 4 084 426 (GALES) <br> * Fig.; Zusammenfassung * | | 2 | G 01 F 23/00 <br> B 65 B 55/00 |
| | ---- | | | |

Der vorliegende Recherchenbericht wurde für alle Patentansprüche erstellt.

| Recherchenort | Abschlußdatum der Recherche | Prüfer |
|---|---|---|
| WIEN | 08-08-1986 | GRONAU |